(19) Europäisches Patentamt
European Patent Office
Office européen des brevets

(11) **EP 4 527 905 A1**

(12) **EUROPEAN PATENT APPLICATION**

(43) Date of publication:
**26.03.2025 Bulletin 2025/13**

(21) Application number: **23315360.0**

(22) Date of filing: **19.09.2023**

(51) International Patent Classification (IPC):
***C09K 11/06*** *(2006.01)* ***C07F 9/50*** *(2006.01)*

(52) Cooperative Patent Classification (CPC):
**C07F 9/5045; C09K 11/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Centre National de la Recherche Scientifique 75794 Paris Cedex 16 (FR)**
- **Université de Rennes 35042 Rennes (FR)**
- **École Nationale Supérieure de Chimie 35708 Rennes Cedex 7 (FR)**
- **Institut National des Sciences Appliquées de Rennes 35708 Rennes Cedex 7 (FR)**

(72) Inventor: **Lescop, Christophe**
**35340 Liffré (FR)**

(74) Representative: **Cabinet Chaillot**
**16/20, avenue de l'Agent Sarre**
**B.P. 74**
**92703 Colombes Cedex (FR)**

(54) **A MOLECULAR MATERIAL WITH IRREVERSIBLE TRANSITION OF ITS LUMINESCENCE ACTIVATED BY DEHYDRATION IN THE SOLID STATE**

(57) The present invention relates to a tetrametallic metallacycle Cu(I) derivative of formula B:

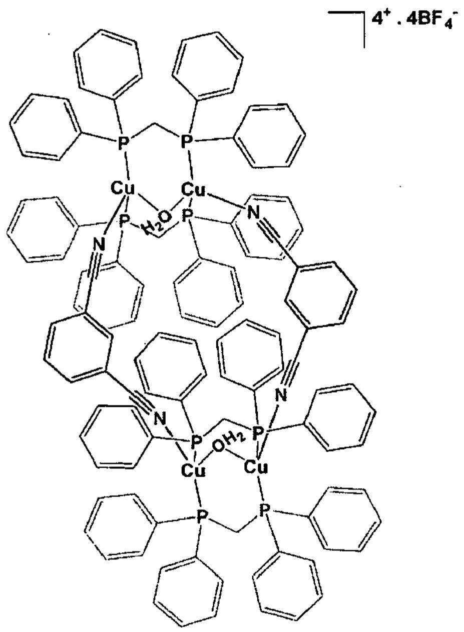

EP 4 527 905 A1

## Description

The present invention relates to a molecular material with irreversible transition of its luminescence activated by dehydration in the solid state.

Non-Destructive Testing (NDT) is a set of methods to evaluate the integrity of structures or materials, without damaging them and at different stages of their operation cycles. The increasing use of composite materials in mechanical parts makes thermal monitoring NDT indispensable. Indeed, composite materials generally have much lower degradation or alteration temperatures than traditional metallic materials, as well as significantly different ageing processes, particularly associated with temperature variations. It is therefore necessary to ensure that a composite material that can be subjected to temperature variations has not been subjected to excessively high temperatures during its lifetime.

However, it is sometimes very complicated to implement a thermal monitoring NDT for mechanical parts that are subjected to temperature variations during operation. It is therefore necessary to have tracers that can be placed on mechanical parts in operation, to record the thermal experience of these parts over time, especially if these parts have been subjected to excessive temperatures.

An ever-growing attention is focussed on the development of luminescent complexes based on earth abundant non-strategic metal ions as new photofunctional molecular smart materials in alternative to those built on rare and expensive heavy metal ions. Such derivatives can combine high luminescence efficiencies, tunable emission colors and innovative multifunctional properties with attractive low cost syntheses proned for large scale applications. In this context, Cu(I) based molecular assemblies present a fascinating diversity of photophysical properties including Thermally Activated Delayed Fluorescence (TADF) and can exhibit in ambient conditions exalted solid-state emission properties whose performances now compete those of phosphorescent derivatives based on heavy metal ions complexes. This rightly generates an increasing attention for the preparation of efficient OLEDs based on this cheap metal ion. However, the interest focused on photoluminescent Cu(I) molecular assemblies should not be restricted to this field of application as the unique variety of electronic and structural structures carried by Cu(I)- based derivatives can give access to unusual set of properties opening alternative perspectives for innovative photofunctional materials.

Indeed, the Cu(I) ion's coordination complexes present an incomparable structural flexibility rendering the gross conformation of such species very sensitive to external stimuli. This makes these derivatives compounds of choice for the development of luminescent stimuli-responsive materials, exhibiting sensitivity of their photoluminescent properties to various external constraints. However, such high flexibility was initially considered as strongly detrimental in the perspective of the design of highly luminescent complexes. Indeed efficient geometrical re-organization processes in the excited states can take place, connected with fast nonradiative decay rates and resulting in low RT emission quantum yields. In order to avoid such eventuallity, beside the most popular approach consisting in using very bulky ligands, the present inventors have previously studied an synthesis alternative consisting in an adaptation of coordination-driven supramolecular (CDS) synthetic principle, promoting integration of luminescent pre-organized Cu(I) polymetallic building-blocks within self-assembled multimetallic derivatives bearing typically multiple chelates and metallacycle sub-units. Within such geometrically constrained assemblies, the Cu(I) metal centers' coordination sphere are subject to significantly reduced possibility of structural re-organization in the excited states due to the high energetic cost of such process in such polycyclic architectures. As a result, nonradiative desactivation pathways can be significantly minimized favoring emergence of enhanced solid-state luminescence properties. The present inventors report herein the CDS synthesis and characterisation of a new highly luminescent tetrametallic metallacycle Cu(I) derivative B bearing rare bridging aqua ligands coordinated to Cu(I) ions. Extended experimental and computational studies highlight efficient solid-state TADF properties. Most importantly, derivative B presents a unique transition of its luminescent properties occuring at high temperature in the solid-state related to the removal of the water molecule accompagnied by a promotion of cuprophilic interactions, affording a new solid-state TADF luminophore C. This original behaviour highlights an unconventional solid-state stimuli-sensitive irreversible luminescent response to temperature variation which open perspectives of new applications for such Cu(I)-based luminophores in manifold fields including security control, anticounterfeing or non-destructive control.

The objective of the present invention is to propose as a tracer a thermochromic Cu(I) ion-based compound in luminescence that makes it possible to determine whether at least one critical temperature of the medium in which it has been placed has been exceeded over time. This temperature overrun induces an irreversible change in the color of the light emitted by the Cu(I) ion-based compound prepared, which is visible to the naked eye when the device returns to room temperature. A posteriori monitoring of the thermal experience of this device, in particular with regard to the crossing or not of a critical temperature, is possible.

The present inventors have highlighted a very general supramolecular synthetic approach allowing to use several types of luminescent polymetallic precursors of the Cu(I) ion in order to access to a wide range of multifunctional emissive molecular materials (thermo-, mechano-, solvato- and vapour-chromated emissions). Some of these luminescent derivatives can evolve spontaneously in the solid state towards new emissive species by reorganization and departure of volatile fragments. These processes take place in the solid state at well defined temperatures, are not

destructive and are associated with an irreversible variation in the solid state of the luminescence properties of the derivative.

A posteriori monitoring of the thermal experience of a technological device on which these derivatives have been deposited, in particular with regard to whether or not a critical temperature has been crossed, is possible by simply visually checking the color emitted by the luminescent material under UV-visible irradiation.

To this end, the present invention relates on a tetrametallic metallacycle Cu(I) derivative of formula B:

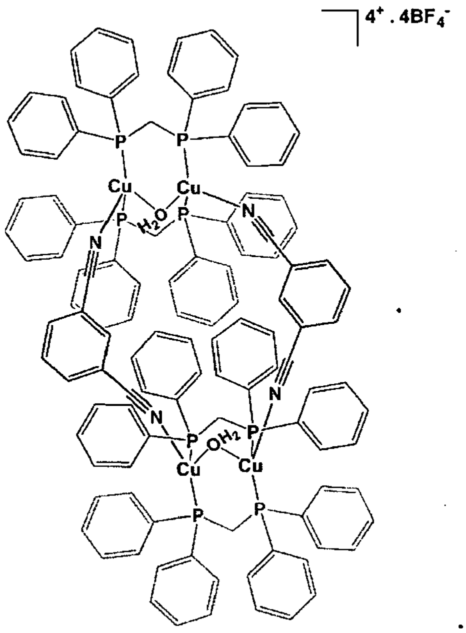

The present invention also relates on a process for the preparation of the derivative of formula B, characterized by the fact that $[Cu(CH_3CN)_4]BF_4$ is reacted with bis(diphenylphosphino)methane in an equimolar ratio in a solvent medium, then the reaction product is reacted with 1,3-dicyanobenzene in an equimolar ratio in a solvent medium.

The solvent medium may be an organic solvent containing water, advantageously as traces.

The present invention also relates on an use of the derivative of formula B, as a tracer of a thermal event undergone by a part in which the derivative of formula B has been- incorporated, said derivative of formula B emitting a light perceived as yellow-green at room temperature under UV irradiation, losing its two water molecules at a temperature above 165°C to a state corresponding of Formula C:

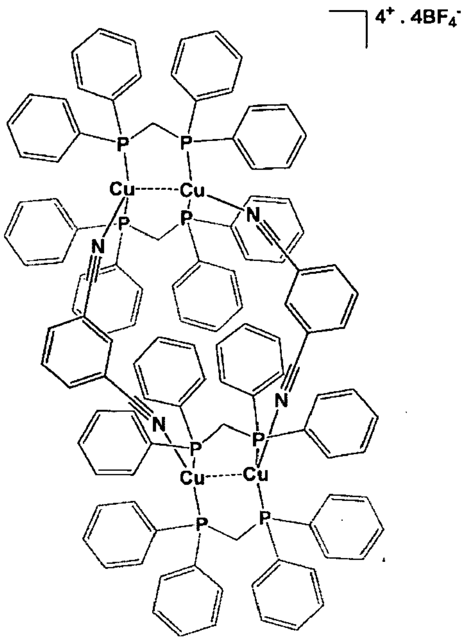

in which it emits light perceived as blue at room temperature under UV irradiation.

The present invention also relates on a method of determining whether a part into which the derivative of formula B has been incorporated as a tracer has undergone a thermal event above 165°C, characterised in that the part to be analysed is illuminated with UV light and it is deduced from the light emitted back whether the workpiece has undergone the thermal event.

In the context of the present invention, the derivatives considered have water molecules associated with the Cu(I) metal centers. These molecules, at a critical temperature, are de-coordinated from the metal center and sublimated, inducing in the solid state an irreversible non-destructive reorganization of the material which presents a variation of its luminescence spectrum particularly noticeable when the system returns to room temperature.

The transited material can then be regenerated by dissolution and recrystallization in non-anhydrous solvents.

The invention relates to the discovery of this reorganization process in the solid state by thermally activated dehydration, the induced modifications of the luminescence spectra, the regeneration process of the initial material and the associated applications within the framework of the non-destructive control of the follow-up of the thermal experiment of technological devices.

The compounds developed by the present inventors show very attractive and particularly promising luminescence properties. They are moreover associated with low-cost, very general and easy to implement synthesis routes. As such, these compounds could find applications in the field of lighting, display but also in the detection of temperature, pressure, gas, vapors and solvents variations.

Nevertheless, the stability of the pure and raw materials, in ambient conditions and in the relevant temperature range, is already proven. Moreover, the large variety of pre-organized precursors that can be considered, combined with all the possibilities offered by connector ligands and the power of supramolecular chemistry, constitute strong guarantees of effective access to a wide range of original, multifunctional and efficient solid molecular materials.

This material could also allow the neutralization at high temperature of a pollutant in gas phase by the reaction and destruction of this one with the water molecules released during the thermal transition, neutralization which could be followed by the variation of the luminescence of the heated luminescence material.

The $[Cu_2(\mu_2\text{-dppm})_2]^{2+}$ bimetallic fragment **A** (dppm = bis(diphenylphosphino)methane) was previously identified as an appealing pre-organised precursor that allowed the straightforward preparation of a large variety of luminescent polymetallic Cu(I) CDS assemblies. As one equivalent of the in-situ formed $[Cu_2(\mu_2\text{-dppm})_2]^{2+}$ unit **A** is reacted in non-anhydrous $CH_2Cl_2$ under air at room temperature (RT) with one equivalent of the ditopic 1,3-dicyanobenzene ligand **L** (Figure 1), a colorless clear solution is obtained. The slow diffusion of pentane vapors in this solution affords after a few days, a homogeneous batch of colorless crystals corresponding to the supramolecular assembly **B** (Figure 1), with a yield of 73 %.

The derivative **B** is characterized in its solid-state IR spectrum by a single ν(C=N) vibration at 2250 $cm^{-1}$ corresponding to the coordination of the nitrile moieites of the ligand **L** to the Cu(I) metal center. These ν(C≡N) stretches appear at slightly lower energies than in the free ligand **L** (2242 $cm^{-1}$) supporting a coordination of the ligand **L** on the Cu(I) metal centers. In addition, a broad band centered at 3450 $cm^{-1}$ suggests the presence of water molecules in the derivative **B.**

The solid-state molecular structure of **B** was established thanks to a single crystal X-ray diffraction study performed at low temperature. It revealed that this compound crystallizes in the triclinic space group P-1 (Table 1) with an asymmetric unit composed of two crystallographically independent but chemically similar halves of the discrete assembly **B,** four tetrafluoroborate counter-anions and six disordered $CH_2Cl_2$ solvent molecules. The derivative **B** is a centrosymmetric cationic tetrametallic metallacycle (Figure 1, Figure 2) resulting from the connection of two $[Cu_2(\mu_2\text{-dppm})_2(\mu_2\text{-OH}_2)]^{2+}$ dimeric units by two ligands **L** acting as ditopic linkers. μ-1,2κ-O semi-bridging aqua ligands (d(O-Cu) = 2.286(2)/2.305(2) and 2.323(2)/2.388(2) Å) supplied by the wet $CH_2Cl_2$ solvent coordinate the Cu(I) metal centers, that present therefore distorted tetrahedral $P_2N_1O_1$ coordination spheres. It is worth mentioning that the presence of these water molecules, in spite of their low affinity for the Cu(I) ions, reveals mandatory to succeed in this self-assembly synthesis since no reaction product can be isolated as the procedure is applied in anhydrous $CH_2Cl_2$, the mother solution staying clear upon pentane vapor diffusion for several months. The intermetallic distances in the $[Cu_2(\mu_2\text{-dppm})_2]$ units (3.227(8) and 3.324(9) Å) are too large for cuprophilic interactions while other metric parameters are classical for such fragments. The connecting ligands **L** are found significantly coplanar with the planes formed by the four Cu(I) metal centers (angles between the mean planes : 13.7° and 25.4°) while the aqua ligands are located pointing toward the center of these metallacycles (distances to planes formed by the four Cu(I) metal centers: 0.003 and 0.023 Å). Finally, $BF_4^-$ counter-anions are lying above and below these metallacyclic scaffolds engaged with the aqua ligands in H-F close contact interactions (d(H-F), ca. 1.8 Å). Derivative **B** display a rare example of a coordination of an aqua ligand coordinated to Cu(I) metal centers. In the unique other example of a semi-bridging aqua coordination mode on a Cu(I) bimetallic unit, similar $[Cu_2(\mu_2\text{-dppm}_2)(\mu_2\text{-OH}_2)]^{2+}$ dimeric units were found in a one-dimensional coordination polymer (1D-CP) obtained in non-anhydrous media with ditopic 1,4-dicyanobenzene. Therefore, changing the relative position of the nitrile fragments of the dicyanobenzene ligand induces a profound alteration of the dimensionality of the multimetallic networks obtained.

The crystals of **B** are colorless under visible light but display under UV irradiation ($\lambda_{ex}$ = 365 nm) an eye-perceived greenish solid-state RT luminescence. The solid-state RT UV-visible absorption spectrum of the derivative **B** presents a broad band centered at 300 nm and one shoulders at ca. 250 nm, typical of $\pi$-$\pi$* transitions centered on the aromatic moieties of the ligands (dppm and **L**). The RT excitation spectra recorded with $\lambda_{em}$ = 515 nm reveals a broad band centered at ca. 370 nm. In the RT emission spectra with $\lambda_{ex}$ = 370 nm a broad featureless band centered at $\lambda_{max}$ = 515 nm is observed (Figure 2) associated with a RT mono-exponential decay time of the excited state of 36 us and a RT emission quantum yield (EQY) of 62 %. Upon cooling, the emission spectrum of derivative **B** presents a gradual red-shift of the emission band observed, affording an intense solid-state eye-perceived yellowish luminescence at low temperature (Figure 2: $\lambda_{em}$ = 525 nm at 80 K) . Concomitantly, the emission decay remains mono-exponential and increases continually, reaching $\tau$ = 382 $\mu$s at 80 K. Upon heating up from RT to 370 K, moderate thermal variations of both the emission spectrum and the lifetime are observed, reaching a plateau region at ca. 340 K with $\lambda_{em}$ = 515 nm and $\tau$ = 14 $\mu$s. Such emission behavior is typical of Cu(I) derivatives showing thermally activated delayed fluorescence (TADF). By fitting the thermal evolution of $\tau$ to the Boltzmann-type equation S1 in SI, values of $\Delta E(S_1\text{-}T_1)$ = 0.1171 eV / 944 cm$^{-1}$, $\tau(S_1)$ = 170 ns and $\tau(T_1)$ = 372 $\mu$s could be determined, typical of a TADF process (Figure 2).
Equation S1 is indicated below:

$$\tau(obs) = \frac{1+\frac{1}{3}\exp\left(-\frac{\Delta E_{ST}}{k_B T}\right)}{\frac{1}{\tau(T_1)}+\frac{1}{3\tau(S_1)}\exp\left(-\frac{\Delta E_{ST}}{k_B T}\right)} \qquad \text{Equation S1}$$

where $\tau$(obs), $\tau$(S1), $\tau$(T1), $k$B, $T$ and $\Delta E_{ST}$ represent the observed lifetime, singlet state decay lifetime, triplet state decay lifetime, Boltzmann constant, temperature and singlet-triplet energy difference, respectively.

The derivative **B** is stable in the solid state under air at RT without visible alteration of its absorption and emission properties for months. However, as a batch of **B** is heated under air up to 200 °C and left to cool down (affording the phase **C,** Figure 1) an intriguing change of its eye-perceived solid-state luminescence ($\lambda_{ex}$ = 365 nm) can be observed from greenish to deep blue while the initial white polycrystalline initial aspect as seen under visible light is preserved. Reproducible TGA-DTA analysis conducted under nitrogen flux from RT to 950 °C revealed that the precursor **B** decomposes at 270 °C. Beforehand, from RT to 100 °C, a loss of mass of ca. 2.5 % takes place together with an endothermic peak assigned to the desorption of included guest solvent molecules. Interestingly, an exothermic peak is observed at 160°C, associated with a slight mass loss of 0.2 %, while no mass nor heat flux variations are detected in the TGA-DTA measurements as the system is left afterwards to cool down to RT, highlighting the irreversibility of this solid-sate transition. Heating a sample of derivative **B** under air below this exothermic peak temperature does not induce after cooling back to RT of the intriguing switch of the luminescence properties observed, which indicates that this alteration is associated with the exothermic event occurring in the solid-state at 160 °C. This is confirmed furthermore by the observation of a clearly eye-perceived switch of the color of the emitted light from greenish to blue as the heating is conducted under UV-vis light excitation ($\lambda$ex = 365 nm) .

The blue luminescent phase **C** can be dissolved in wet $CH_2Cl_2$ affording a colorless clear solution from which greenish luminescent single-crystals of the derivative **B** can be almost quantitatively grown from pentane vapors diffusions revealing the possibility of the regeneration of the pristine compound after the thermolysis treatment is applied. Conversely, as the phase **C** is dissolved in anhydrous $CH_2Cl_2$ affording similarly a colorless clear solution, blue luminescent single crystals are obtained from pentane vapors diffusions. X-ray diffraction study performed on these crystals at low temperature revealed a C2/c monoclinic unit cell bearing in its asymmetric unit one half of a discrete metallacycle, two tetrafluoroborate counter-anions and one half of a $CH_2Cl_2$ solvent molecules. This centrosymmetric metallacycle (Figure 1, Figure 3) is structurally closely related to the derivative **B** as it results from the connection of two $[Cu_2(\mu_2\text{-dppm})_2]^{2+}$ bimetallic fragments by two ditopic linkers **L,** the major structural difference with **B** being due to the absence of $\mu$-1,2$\kappa$-O aqua ligand coordinated on the metal centers. Consequently, the Cu(I) metal centers present distorted trigonal planar $P_2N_1$ coordination sphere and the intermetallic distance within the $[Cu_2(\mu_2\text{-dppm})_2]^{2+}$ units (d(Cu-Cu) = = 2.8630(5) Å in agreement with cuprophilic interactions) is significantly contracted compared to its values in the derivative **B.** Finally, as in the assembly **B,** the ligands **L** are found significantly coplanar with the $Cu_4$ plane (angles between the mean planes: 21.00°) and two $BF_4^-$ counter-anions are located above and below the metallacyclic scaffolds engaged with the ligands **L** in H-F weak contact interactions (d(H-F), ca. 2.5 Å). In a general point of view, due to the lability and fluxionality of the coordination sphere of the Cu(I) ions, rapid and reversible multiple dissociation-reassociation and intramolecular conformational re-organizations may occur in solution. This questions the correspondence existing between the molecular structure of the species obtained in the blue-luminescent bulk phase **C** resulting of the solid-state thermolysis treatment of the derivative **B** and as determined for the blue-luminescent crystals obtained for the dissolution of the phase **C.** The theoretical X-ray powder diffraction diagram calculated for the latter was compared to the RT X-ray powder diffraction diagram measured for the bulk phase **C,** revealing highly superimposable profiles (Figure 4).

This allows concluding that the molecular structure established by X-ray diffraction studies on the single crystals obtained from the dissolution of the phase **C** corresponds to that of the species lying in the bulk phase **C.** Therefore, upon heating at 160 °C, the bulk polycrystalline samples of **B** in the solid-state a decoordination and sublimation of the water molecules (corresponding to exothermic peak and the slight mass loss reproducibly observed in the TGA-DTA measurement) coordinated to the Cu(I) metal centers take place affording the new metallacycle **C.** In agreement with these assumptions, the solid-state IR spectrum of the phase **C** exhibits a ν(C≡N) vibration at 2250 $cm^{-1}$ revealing that the coordination of the nitrile moieites of the ligand **L** to the Cu(I) metal center is maintained. However, the broad band centered at 3450 $cm^{-1}$ present in the solid state IR spectrum of the derivative **B** is not observed which confirms the removal of the aqua ligands in the phase **C.**

The profile of the solid-state RT UV-visible absorption spectrum and the excitation spectrum ($\lambda_{em}$ = 470 nm) of the species **C** are very similar to those recorded for the derivative **B.** However, the RT emission spectra ($\lambda_{ex}$ = 365 nm) presents a broad featureless band centered at $\lambda_{max}$ = 470 nm (Figure 3). Therefore, the RT emission spectrum of compound **C** is blue-shifted compared to one of the derivative **B** ($\Delta\lambda_{emRT}$ = 45 nm). This RT solid-state luminescence is associated with a mono-exponential decay time of the excited state of 11 μs and an emission quantum yield (EQY) of 69 %. Upon cooling, this broad band is preserved and presents a gradual red-shift affording an intense solid-state eye-perceived green luminescence at low temperature ($\lambda_{em}$ = 500 nm at 80 K), keeping all along the cooling process the blue-shift observed compared to the temperature dependant emission spectra of **B.** ($\Delta\lambda_{em80K}$ = 25 nm) .

Upon heating up from RT to 370 K, moderate variations of both the emission spectrum and the lifetime are observed, reaching at 370 K $\lambda_{em}$ = 465 nm and $\tau$ = 5 μs. Similarly to what was observed for its precursor **B,** the emission behavior of the derivative **C** is typical of TADF. By fitting the thermal evolution of $\tau$ to the Boltzmann-type equation S1, as indicated above, in SI, values of $\Delta E(S_1-T_1)$ = 0.1666 eV / 1344 $cm^{-1}$, $\tau(S_1)$ = 7 ns and $\tau(T_1)$ = 82 μs could be determined, typical of a TADF process (Figure 3).

Solid-state post-modifications of self-assembled metallacycle scaffolds via application of non-chemical external stimuli have been previously reported, including covalent bond formations as result of [2+2] photodimerizations. However, the post assembly solid-state reaction highlighted herein reveals an unusual transformation responsive to temperature variation which originality owes much to the flexibility of pre-assembled Cu(I)-based subunits. Indeed, in a general point of view, from Cu(I) precursors a collection of CDS structures is potentially accessible within which the interplay of external factors can rule the selection of a specific scaffold from among all possible ones. Regarding the preparation of the species **B** and **C,** orthogonal external parameters play a key role allowing to interconvert these derivatives. Indeed, in the CDS synthesis of the pristine derivative **B,** the water molecules present in the reactive media clearly have a decisive templating effect in spite of their low affinity for Cu(I) ions. They allow the pre-organization of the bimetallic building-units in a geometry favoring the formation of the cyclic tetrametallic structure of species **B,** while the related assembly **C** cannot be obtained as anhydrous solvent is used highlighting the necessity of this templated pre-organization step. However, as the temperature is increased to 160°C in the crystalline solid-state, the CDS scaffold **B** is converted via an exothermic post-synthetic transformation to the 'water-free' assembly **C.** Importantly the species **C,** that cannot be isolated from dry solvents, can be dissolved and preserved in dry $CH_2Cl_2$. This highlights the mandatory preformation of the metallacycle scaffold **B** in solution to allow subsequently the obtention of **C** via a post-synthetic solid-state reaction (Figure 1). A subtle balance of antagonist electronic and steric effects clearly governs the relative stabilities of these two metalacyclic species, in which the energetic cost of the release of the water molecules from derivative **B** is at less partially compensated by stabilization gain assigned to the formation of the cuprophilic interactions in the compound **C.**

For the syntheses reported, procedures were performed under air, in a simple flask. Commercially available solvents were used as received without further purification. Commercially available reagents $[Cu(CH_3CN)_4]BF_4$ and 1,3-dicyanobenzene were obtained from Aldrich. Bis(diphenylphosphino)methane(dppm) was supplied by Acros Organics.

All solution NMR spectra were measured in $CD_2Cl_2$ on Bruker Av300 or Av400 spectrometer using 5 mm standard NMR tubes. $^{1}H$ NMR chemical shifts were reported in parts per million (ppm) relative to $Me_4Si$ as external standard. $^{31}P\{^{1}H\}$ NMR downfield chemical shifts were expressed with a positive sign, in ppm, relative to 85% $H_3PO_4$ respectively.

FT-IR measurements have been performed on a Perkin Elmer Frontier spectrometer using UATR (Universal Attenuated Total Reflectance) accessory. Spectra have been recorded between 650 $cm^{-1}$ and 4000 $cm^{-1}$, on pure samples.

UV-vis solid-state absorption measurements have been recorded on a Perkin-Elmer Lambda 650 spectrometer using a 60 mm integrating sphere. Spectra have been recorded between 800 nm and 200 nm, on pellets.

Steady-state emission spectra and luminescence quantum yield measurements were recorded on a Horiba Jobin-Yvon (*HJY*) Fluorolog-3 (FL3-21HR550) fluorescence spectrofluorometer equipped with an IR R928P PMT / *HJY* FL-1073 detector and with an integrating sphere. Low temperature measurements were allowed by using a OptistatCF (*Oxford Inst.*) in the range of 77 K to 300 K. High temperature measurements were conducted by using Horiba Peltier sample cooler F3004. The quantum yields of derivatives were measured in the solid-state at room temperature. In order to ensure a greater accuracy, they have been measured three times, and the value given is obtained from the averaging of

these measurements.

Excited-state lifetimes in the range of 80 K to 380K were measured with a delta hub (TCSPC: Time-Correlated-Single-Photon-Counting) + delta diode system. allowing to measure excited-state lifetimes between 500 ps and 10 μs and with a pulsed xenon source (FL-1035) allowing to measure excited-state lifetimes longer than 10 μs. Solid sample was placed in a quartz sample holders inside the integrating sphere and the cryostat and maintained at the desired temperature until equilibrium was reached before recording the spectrum. The experimental data were then fitted according to the following equation :

$$\tau(\mathrm{obs}) = \frac{1 + \frac{1}{3}\exp(-\frac{\Delta E_{\mathrm{ST}}}{k_{\mathrm{B}}T})}{\frac{1}{\tau(\mathrm{T_1})} + \frac{1}{3\tau(\mathrm{S_1})}\exp(-\frac{\Delta E_{\mathrm{ST}}}{k_{\mathrm{B}}T})}$$

where $\tau$(obs), $\tau(S_1)$, $\tau(T_1)$, $k_B$, $T$ and $\Delta E_{ST}$ represent the observed lifetime, singlet state decay lifetime, triplet state decay lifetime, Boltzmann constant, temperature and singlet-triplet energy difference, respectively.

Powder X-ray diffraction diagrams have been collected using a Panalytical X'Pert Pro diffractometer with an X'celerator detector. The typical recording conditions were 45 kV, 40 mA for Cu Kα (λ = 1.542Å), the diagrams were recorded in theta/theta mode in 60 min between 4° and 75° with a step size of 0.0132° and a scan time of 0.6 s. Temperature dependant powder X-ray diffraction measurements were performed by fitting a HTK1200 Anton-Paar oven, under controlled atmosphere. TD-PXRD were performed by collecting a diffraction diagram every 10 °C with a heating ramp of 20 °C/min between each measurement. TD-PXRD diagrams were performed in 5 minutes between 4° and 50° with a step size of 0.0132° and a scan time of 0.09s.

Thermal analysis have been performed using a Perkin-Elmer Pyris Diamond TG/DTA, between 25 °C and 950 °C with a 5 °C/min heating ramp in platinum crucibles under $N_2$ atmosphere, and between 25 °C and 350 °C with a 5 °C/min heating ramp in aluminum crucibles under $N_2$ atmosphere.

Brief description of the drawings

[Fig. 1] is the reaction scheme of obtention of the derivative of Formula B, together with its thermolysis in compound C.

[Fig. 2] represents at the left the molecular X-ray structures (counteranions and solvent molecules have been omitted for clarity) of derivative of Formula B and at the right the temperature variable solid-state emission spectra and plot of emission decay lifetime against temperature upon excitation at 370 nm (the black arrow shows the direction of the thermochromic shift of the solid-state emission spectra observed upon cooling).

[Fig. 3] represents at the left the molecular X-ray structures (counteranions and solvent molecules have been omitted for clarity) of compound C and at the right the temperature variable solid-state emission spectra and plot of emission decay lifetime against temperature upon excitation at 370 nm.

[Fig. 4] represents the experimental (top) and the simulated (bottom) powder X-Ray diffraction pattern recorded for the derivative C.

[Fig. 5] is a $^1$H NMR RT spectra of the derivative **B** in $CD_2Cl_2$.

[Fig. 6] is as $^{31}$P{$^1$H} NMR RT spectra of the derivative **B** in $CD_2Cl_2$.

[Fig. 7] is an IR spectrum of the derivative **B** in the solid state at room temperature under air.

[Fig. 8] is an IR spectrum of the derivative **C** in the solid state at room temperature under air.

[Fig. 9] is a non-normalized temperature-dependent (arbitrary units) solid state emission spectra of derivative **B** recorded under air with $\lambda_{ex}$ = **370** nm.

[Fig. 10] is a non-normalized temperature-dependent (arbitrary units) solid state emission spectra of **C** recorded under air with $\lambda_{ex}$ = **365** nm.

[Fig. 11] is a solid-state UV-Vis absorption spectrum of derivative **B** in the solid-state under air at room temperature.

[Fig. 12] is a solid-state UV-Vis absorption'spectrum of derivative **C** in the solid-state under air at room temperature.

[Fig. 13] is a TGA-DTA analysis of derivative **B** until 900 °C.

[Fig. 14] is a TGA-DTA analysis of derivative **B** until 200 °C.

[Fig. 15] is a TGA-DTA analysis of derivative **C** until 900 °C.

[Fig. 16] is a TGA-DTA analysis of derivative **C** until 200 °C.

[Fig. 17] is a solid state excitation spectrum of derivative **B** at room temperature recorded under air for $\lambda_{em}$ = 515 nm.

[Fig. 18] is a solid state excitation spectrum of **C** at room temperature recorded under air for $\lambda_{em}$ = 470 nm.

The following Examples illustrate the present invention.

**Example 1: Synthesis of derivative B**

To a wet $CH_2Cl_2$ solution (10 ml) of $[Cu(CH_3CN)_4]BF_4$ (0.13 mmol, 40.00 mg), having traces of water, was added one equivalent of dppm (bis(diphenylphosphino)methane) (0.13 mmol, 48.88 mg). The mixture was stirred for 20 minutes at room temperature then was added the $CH_2Cl_2$ solution (2 ml) of 1,3-dicyanobenzene (0.06 mmol, 8.16 mg). This mixture was stirred for 2 hours at room temperature. This crude solution was then filtered over cotton and was after left upon pentane vapor diffusion, affording the derivative **B** (0.024 mmol, 58 mg, 73% yield) as an air-stable colorless solid.

$^1$H NMR ($CD_2Cl_2$, 300 MHz, ppm, Figure 5): $\delta$ = 8.87 (s, 2H, $H_{arom}$), 7.73 (d, $^3$J(H-H)= 7.3Hz, 4H, $H_{arom}$), 7.67-7.61 (t, $^3$J(H-H)= 15.9Hz ,2H, $H_{arom}$), 7.41-7.20 (m, 80H, $H_{dppm}$), 3.60 (s, 8H, $PCH_2P$)
$^{31}$P{$^1$H} NMR ($CD_2Cl_2$, 300 MHz, ppm, Figure 6) : $\delta$ = -8.5(s, $P_{dppm}$).
IR (cm$^{-1}$, Figure 7): 3456 (w), 3057 (w), 2951 (w), 2902 (w), 2250 (w), 1970-1816 (wave), 1670 (w), 1483 (m), 1437 (s), 1050 (vs), 738 (vw), 684 (vw).

**Example 2: Synthesis of derivative C**

A white polycrystalline batch of the derivative **B** (0.016 mmol, 40.00 mg) was heating up in the solid-state to 200 °C on a glass plate under air in an oven, kept at this temperature for 5 min, and then left to cool down to room temperature affording a white polycrystalline batch of the derivative **C,** characterized by the emission of an eye-perceived homogeneous blue luminescence upon excitation with a 365 nm UV lamp (0.016 mmol, 39.41 mg, 100 % yield).
IR (cm$^{-1}$, figure 8): 3057 (w), 2951 (w), 2902 (w), 2250 (w), 1970-1816 (wave), 1670 (w), 1483 (m), 1437 (s), 1050 (vs), 738 (vw), 684 (vw).

**Example 3: X-ray Crystallographic Study**

Single crystal data collection for **B** were performed at 150 K with a D8 Venture Bruker AXS (Centre de Diffractométrie, Université de Rennes 1, France) with Mo-$K\alpha$ radiation (A = 0.71073 Å). Reflections were indexed, Lorentz-polarization corrected and integrated by the *DENZO* program of the KappaCCD software package. The data merging process was performed using the SCALEPACK program ([S1]). Structure determinations were performed by direct methods with the solving program SIR97 ([S2]) that revealed all the non-hydrogen atoms. SHELXL program ([S3]) was used to refine the structures by full-matrix least-squares based on $F^2$. All non-hydrogen atoms were refined with anisotropic displacement parameters.

Single crystals of all these derivatives were always coated in paratone oil, mounted at low temperature on the diffractometer goniometer as quickly as possible in the case of the solvated crystals. Which is concerning the fact that these crystals kept their single-crystal integrity once removed from the mother solution and dried. X-ray data collection were performed at low temperature. In all cases, in the crystal lattices of the coordination complexes studied, dichloromethane solvent molecules were found in addition to the cationic coordination complexes and their counter-anions. In the case of the derivatives **B,** the protons of the water molecules were located from difference Fourier maps and refined isotropically.

In addition, in the case of the derivative **B,** two symmetrically independent metallacycles were determined. Their

geometrical differences are essentially due to various orientation of the phenyl rings of the dppm ligands and their interactions with the included tetrafluoroborates anions and solvent molecules. However, the interatomic distances observed between the oxygen atom of the semi-bridging aqua ligands and the Cu(I) metal ions are slightly different in each metallacycles suggesting a flexible coordination mode. The included dichloromethane solvent molecules were found to be highly disordered in the case of the derivative **B** and a correct modelling of the disorder of these solvent molecules was not always possible leading to rather high anisotropic displacement parameters for some of their atoms. We have therefore proceeded to a 'squeeze' treatment) in order to remove the scattering contribution of these molecules which cannot be satisfactorily modelled (6 $CH_2Cl_2$ molecules per asymmetric unit). As a result, since these disordered molecules occupy a significant volume of the unit cell, several ALERTs A appear in the checkcif reports since " VERY LARGE Solvent Accessible VOIDs"' are present in the structure resolution. In addition, in each metallacycle, one phenyl ring of the dppm ligands in the assymetric unit was found disordered over two neighboring positions and the relative occupancies were ponderated. Yet, despite this modelling, refinement cycles converged toward high anisotropy parameters for some of the atoms modelled inducing several ALERT A and an ALERT B in the checkcif report.

Table 1 gives the crystallographic data and structure refinement for derivative **B** after the "squeeze" treatment (values in italic are related to the relevant data before the squeeze treatment) and derivative **C** (no "squeeze" treatment was required).

Atomic scattering factors for all atoms were taken from International Tables for X-ray Crystallography ([S5]).

[Table. 1]

| | **B** | **C** |
|---|---|---|
| Molecular formula | $C_{116}H_{100}Cu_4N_4B_4F_{16}O_2P_8Cl_0$ *($C_{122}H_{112}Cu_4N_4B_4F_{16}O_2P_8Cl_{12}$)* | $C_{117}H_{98}Cu_4N_4B_4F_{16}P_8Cl_2$ |
| Molecular weight | 2431.16*(2940.72)* | 2480.05 |
| *a*(Å) | 17.586(5) | 20.9820(2) |
| *b*(Å) | 18.039(5) | 18.7215(2) |
| *c*(Å) | 21.280(5) | 29.1197(3) |
| $\alpha$(°) | 77.225(5) | 90 |
| $\beta$(°) | 81.028(5) | 100.8930(1) |
| $\gamma$(°) | 89.252(5) | 90 |
| *V* (Å$^3$) | 6501.7(9) *(6501(3))* | 11232.5(2) |
| *Z* | 2 | 4 |
| *Dc* (g cm$^{-3}$) | 1.242 *(1.502)* | 1.467 |
| Crystal system | Triclinic | Monoclinic |
| Space group | P -1 | C2/c |
| Temperature (K) | 150(2) | 123(2) |
| Wavelength Mo-*K*α (Å) | 0.71069 | 1.54184[a] |
| Crystal size (mm) | 0.25 * 0.17 * 0.12 | 0.18 * 0.12 * 0.04 |
| $\mu$ (mm$^{-1}$) | 0.812 *(1.06)* | 3.020 |
| *F*(000) | 2480 *(2984)* | 5048 |
| $\theta$ limit (°) | 2.14 - 27.51 | 3.09 - 73.13 |
| Index ranges *hkl* | $-22 \leq h \leq 22$, $-23 \leq k \leq 23$, $-27 \leq l \leq 27$ | $-26 \leq h \leq 24$, $-23 \leq k \leq 20$, $-33 \leq l \leq 36$ |
| Reflections collected | 113703 | 32807 |
| Independant reflections | 29608 | 10731 |
| Reflections [$I>2\sigma(I)$] | 17486 *(17669)* | 9543 |
| Data/restraints/ parameters | 29608/ 0 / 1358 *(1663)* | 10731/ 0 / 699 |
| Goodness-of fit on $F^2$ | 1.066 *(1.008)* | 1.041 |
| Final *R* indices [$I>2\sigma(I)$] | R1= 0.0845 *(0.0972)* | R1= 0.0392 |
| | wR2= 0.2028 *(0. 2060)* | wR2= 0.1061 |
| *R* indices (all data) | R1= 0.1382 *(0.1.691)* | R1= 0.0441 |
| | wR2= 0.2266 (0. 2465) | wR2= 0.1092 |
| Largest diff peak and hole (e Å$^{-3}$) | 1.476 and -0.927 *(1.718 and -1.266)* | 0.91 and -0.75 |

[a]: Cu-*K*α

**Example 4: Photophysical study**

The thermal variation of the emission spectra of the compound **B** is characterized by a large band centered at ca. 515 nm ($\lambda_{ex}$ = 370 nm) with a RT EQY of 62 %. Upon cooling to 80 K, the emission spectra show a moderate.red shift together with a a net intensity enhancement (Figure 9), featuring at low temperature an eye-perceived green-yellow luminescence. The temperature-dependence of the emission spectra of **C** shows a large band centered at ca. 470 nm ($\lambda_{ex}$ = 365 nm) and a RT EQY of 69% and show an obvious red shift and intensity enhancement with temperature cooling down to 80 K (Figure 10), being associated with a low temperature eye-perceived green luminescence.

Table 2 gives the photophysical data for derivatives **B,** and **C** in the solid state at room temperature.

[Table. 2]

| | $\lambda_{em}$ (nm)$^a$ | $\Phi_{em}$ | $\tau_{obs}$ ($\mu$s)$^{\alpha}$ |
|---|---|---|---|
| **B** ($\lambda_{ex}$ = 370 nm) | 515 (525) | 62 | ca. 36 (382) |
| **C** ($\lambda_{ex}$ = 365 nm) | 470 (500) | 69 | ca. 11 (95) |

[a] Data recorded at 80 K are given in parentheses

References

[S1] Otwinowski, Z.; Minor, W. In Methods in Enzymology, (Ed.: C.W. Carter, Jr. & R.M. Sweet), New York: Academic Press, 1997, 276, 307.

[S2] Altomare, A.; Burla, M. C.; Camalli, M.; Cascarano, G.; Giacovazzo, C.; Guagliardi, A.; Moliterni, A. G. G.; Polidori, G.; Spagna, R. J. of Applied Cryst. 1999, 32, 115.

[S3] Sheldrick G.M., SHELX97, Program for the Refinement of Crystal Structures, University of Göttingen, Germany, 1997.

[S4] (a) Spek, A. L. J. Appl. Crystallogr. 2003, 36, 13; (b) van der Stuis, P.; Spek, A. L. Acta Crystallogr. 1990, 46, 194.

[S5] International Tables for X-ray Crystallography, vol C, Ed. Kluwer, Dordrech, 1992.

**Claims**

**1.** - A tetrametallic metallacycle Cu(I) derivative of formula B:

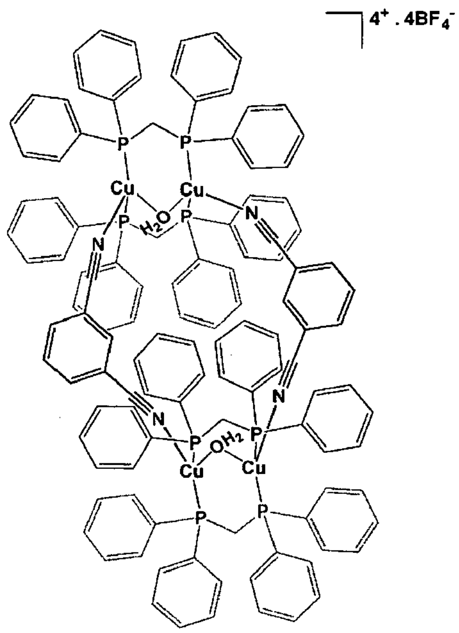

.

**2.** - A process for the preparation of the derivative of formula B according to claim 1, **characterized by** the fact that $[Cu(CH_3CN)_4]BF_4$ is reacted with bis(diphenylphosphino)methane in an equimolar ratio in a solvent medium, then the reaction product is reacted with 1,3-dicyanobenzene in an equimolar ratio in a solvent medium.

**3.** - The process according to claim 2, **characterized by** the fact that the solvent medium is an organic solvent containing water, advantageously as traces.

**4.** - An use of the derivative of formula B according to claim 1, as a tracer of a thermal event undergone by a part in which the derivative of formula B has been incorporated, said derivative of formula B emitting a light perceived as yellow-green at room temperature under UV irradiation, losing its two water molecules at a temperature above 165°C to a state corresponding of Formula C:

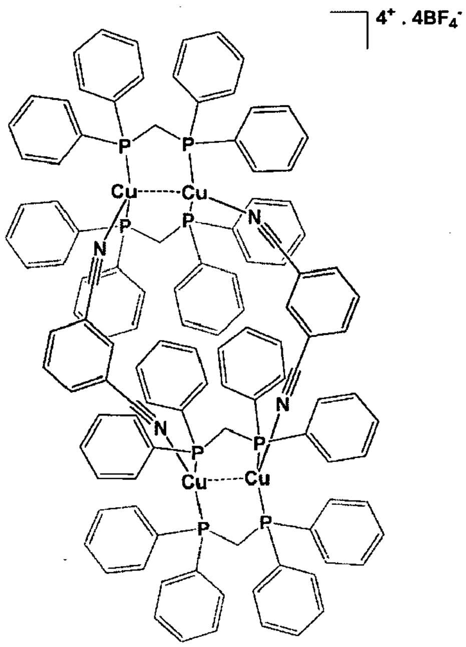

in which it emits light perceived as blue at room temperature under UV irradiation.

**5.** - A method of determining whether a part into which the derivative of formula B according to claim 1 has been incorporated as a tracer has undergone a thermal event above 165°C, **characterised in that** the part to be analysed is illuminated with UV light and it is deduced from the light emitted back whether the workpiece has undergone the thermal event.

[Fig. 1]

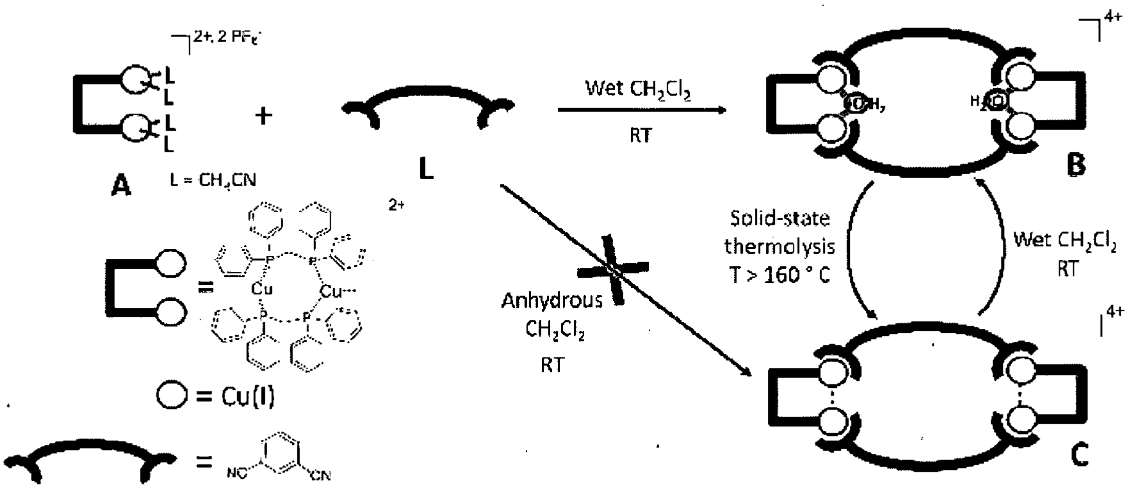
Wet CH2Cl2
RT
Solid-state thermolysis
T > 160 ° C
Wet CH2Cl2
RT
Anhydrous
CH2Cl2
RT
= Cu(I)

[Fig. 2]

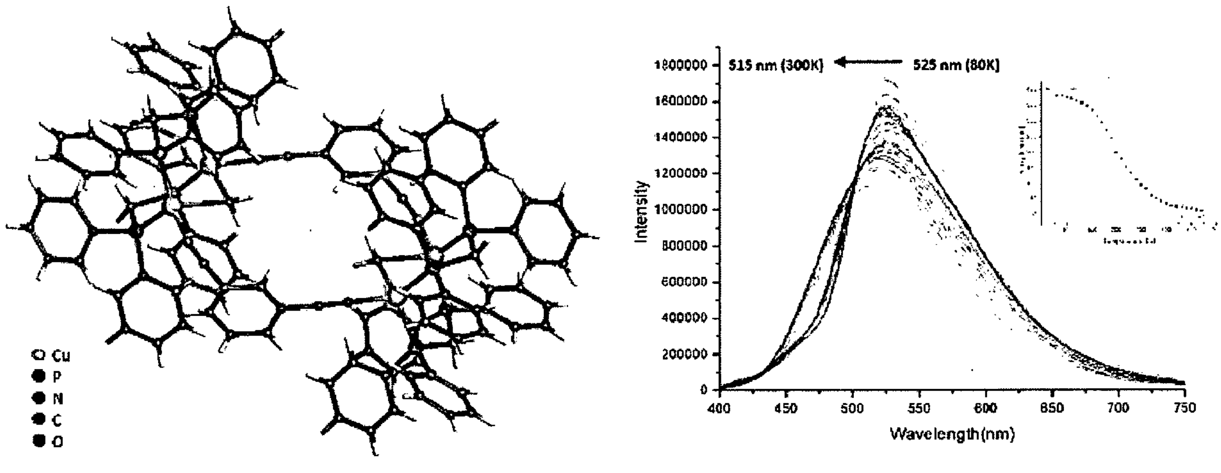
Cu
P
N
C
O
515 nm (300K)
525 nm (80K)
Intensity
Wavelength(nm)

[Fig. 3]

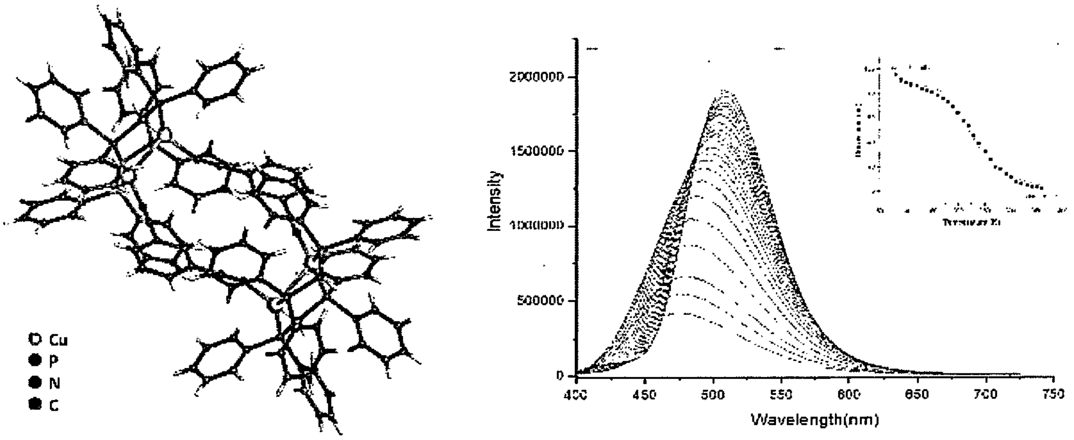
Cu
P
N
C
Intensity
2000000
1500000
1000000
500000
0
400
450
500
550
600
650
700
750
Wavelength(nm)

[Fig. 4]

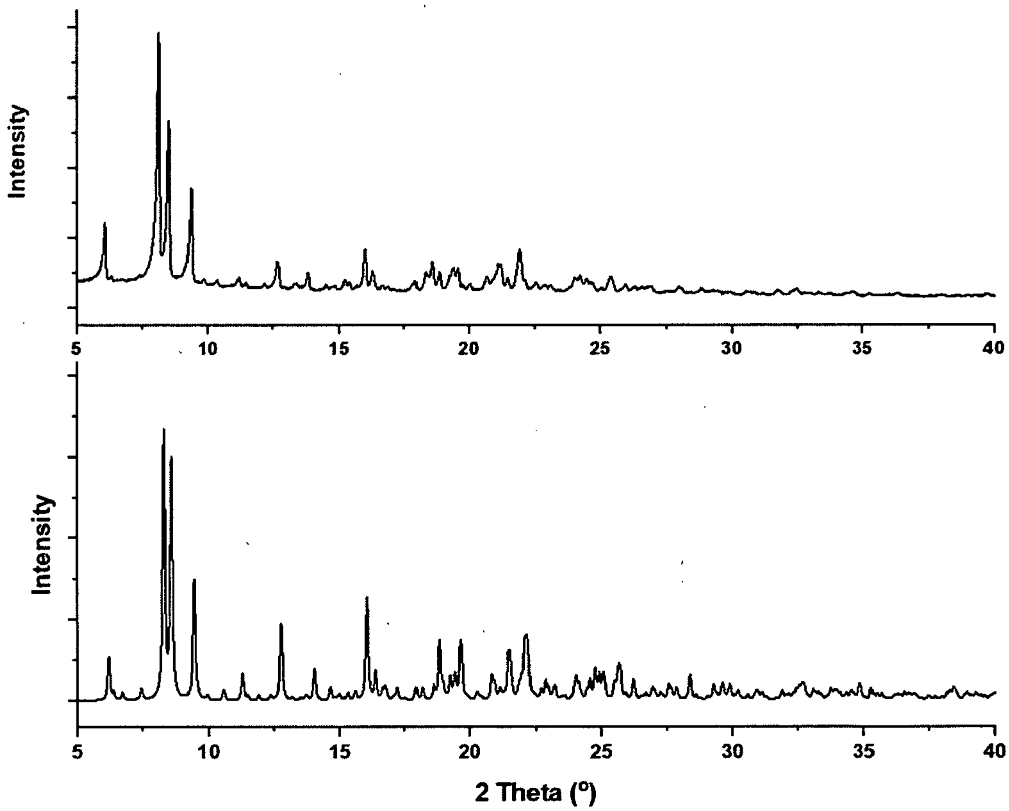
Intensity
5
10
15
20
25
30
35
40
Intensity
5
10
15
20
25
30
35
40
2 Theta (°)

[Fig. 5]

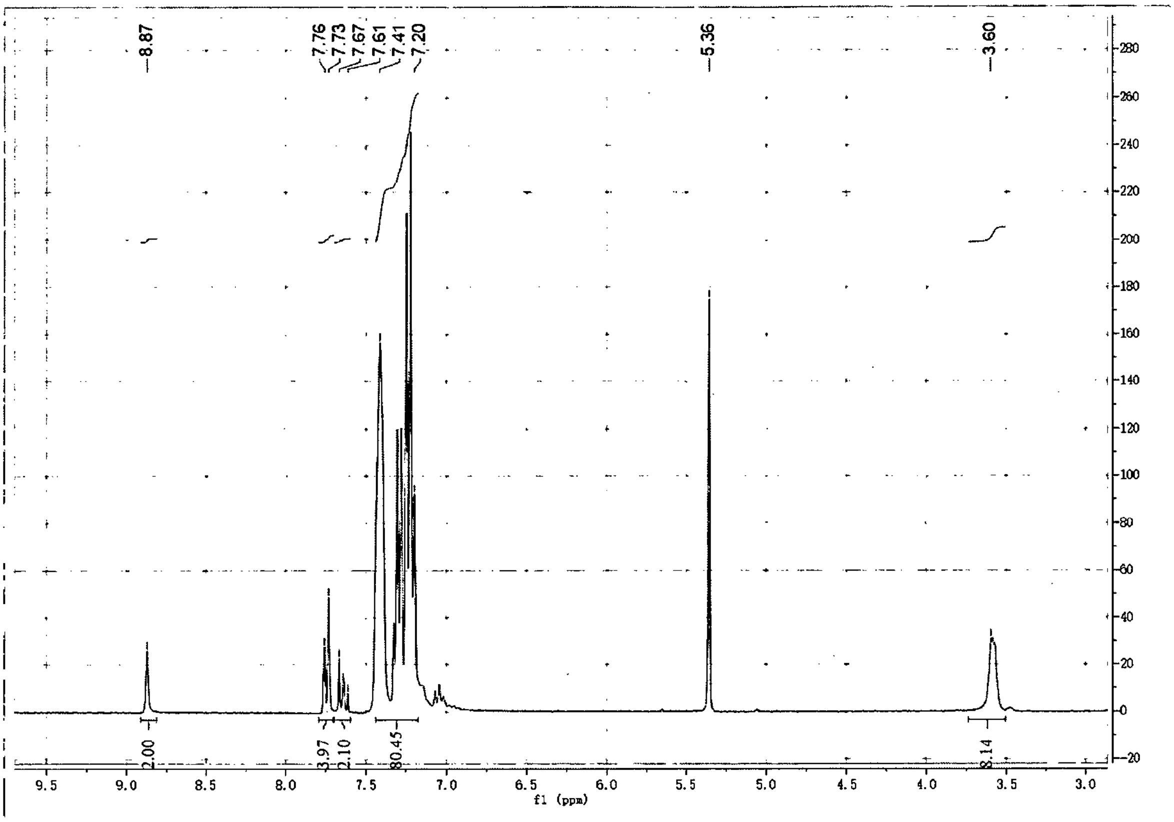
8.87
7.76
7.73
7.67
7.61
7.41
7.20
5.36
3.60
2.00
3.97
2.10
80.45
8.14
9.5 9.0 8.5 8.0 7.5 7.0 6.5 6.0 5.5 5.0 4.5 4.0 3.5 3.0
f1 (ppm)

[Fig. 6]

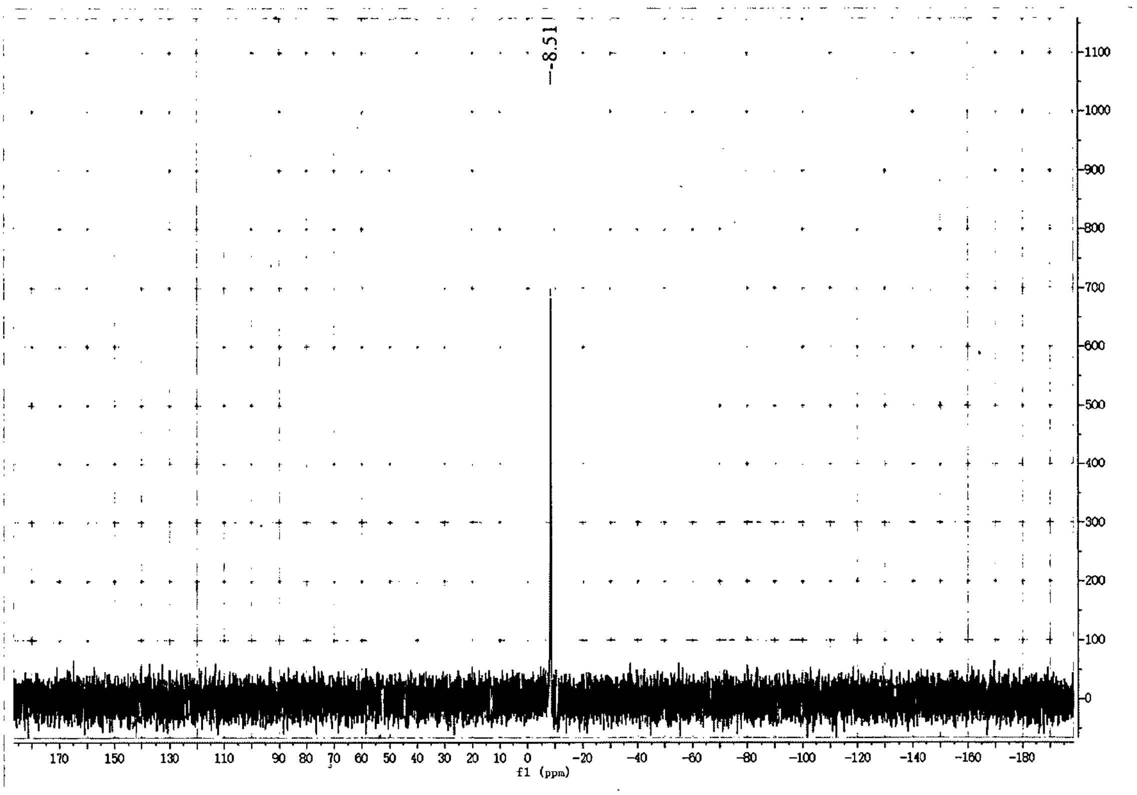
-8.51
170 150 130 110 90 80 70 60 50 40 30 20 10 0 -20 -40 -60 -80 -100 -120 -140 -160 -180
f1 (ppm)

[Fig. 7]

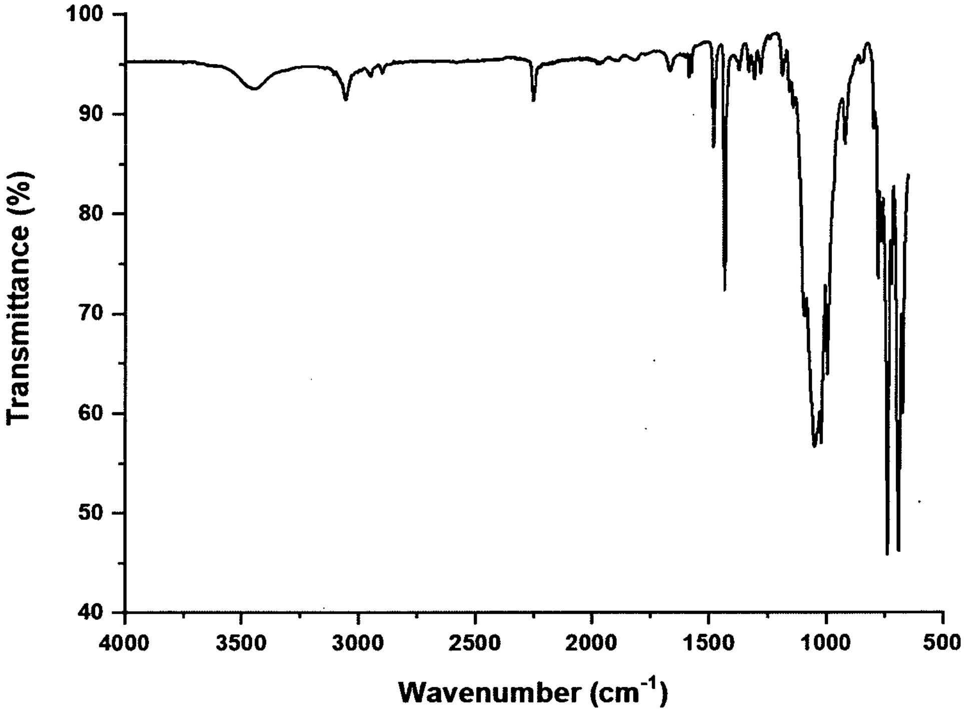
Transmittance (%)
100
90
80
70
60
50
40
4000
3500
3000
2500
2000
1500
1000
500
Wavenumber (cm-1)

[Fig. 8]

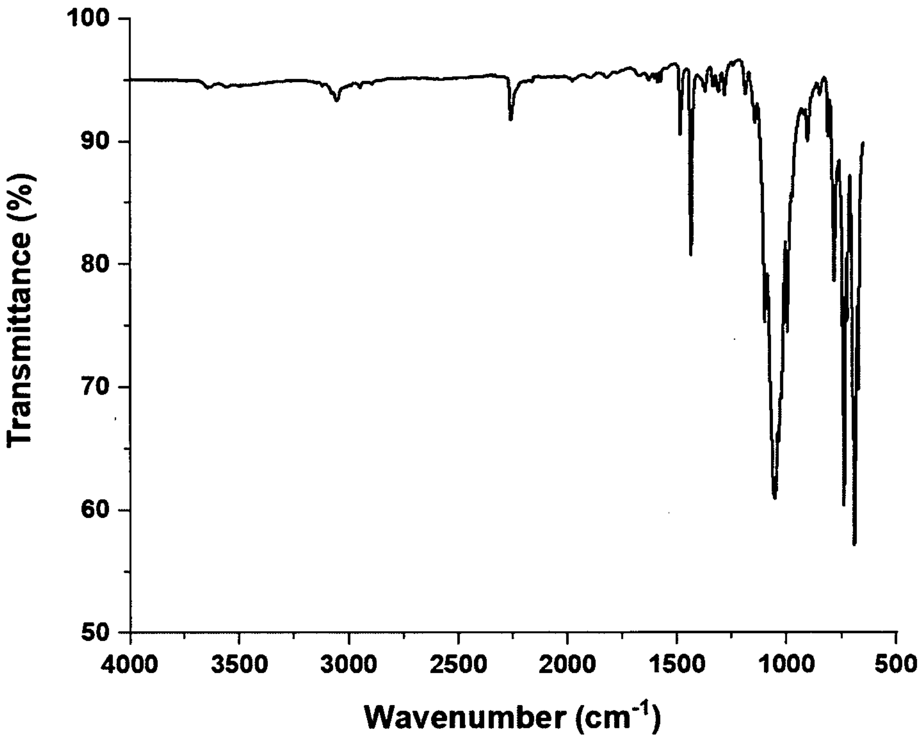
Transmittance (%)
100
90
80
70
60
50
4000
3500
3000
2500
2000
1500
1000
500
Wavenumber (cm-1)

[Fig. 9]

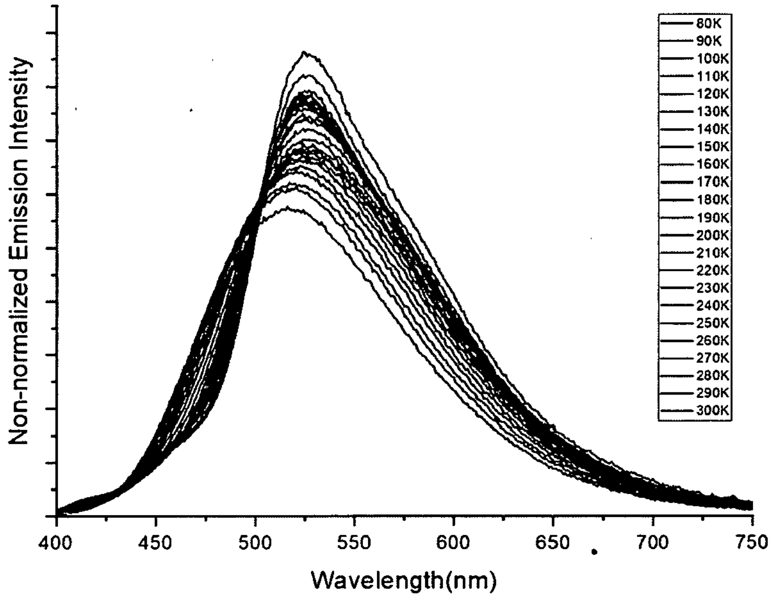
Non-normalized Emission Intensity
Wavelength(nm)
400
450
500
550
600
650
700
750
80K
90K
100K
110K
120K
130K
140K
150K
160K
170K
180K
190K
200K
210K
220K
230K
240K
250K
260K
270K
280K
290K
300K

[Fig. 10]

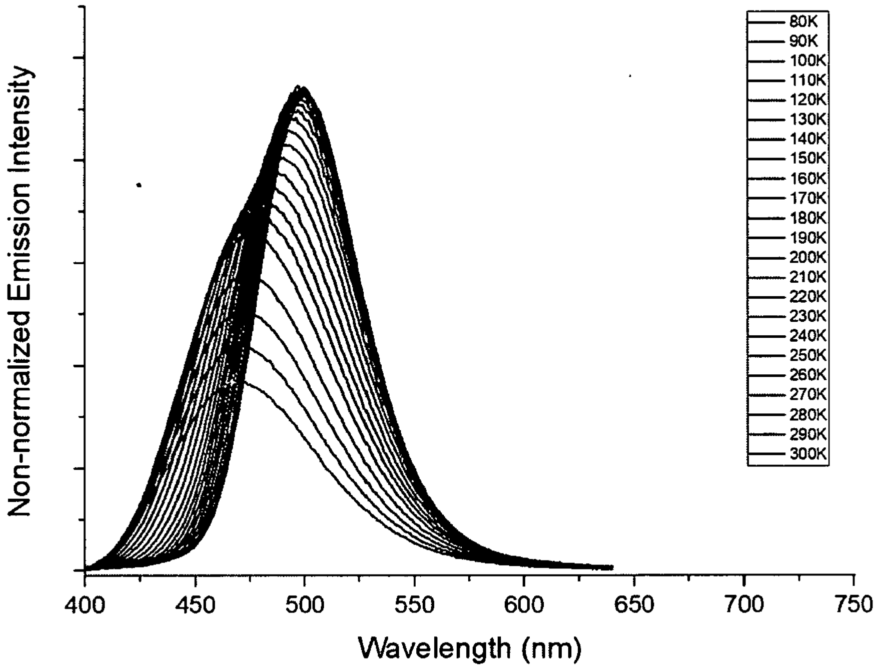
Non-normalized Emission Intensity
Wavelength (nm)
400
450
500
550
600
650
700
750
80K
90K
100K
110K
120K
130K
140K
150K
160K
170K
180K
190K
200K
210K
220K
230K
240K
250K
260K
270K
280K
290K
300K

[Fig. 11]

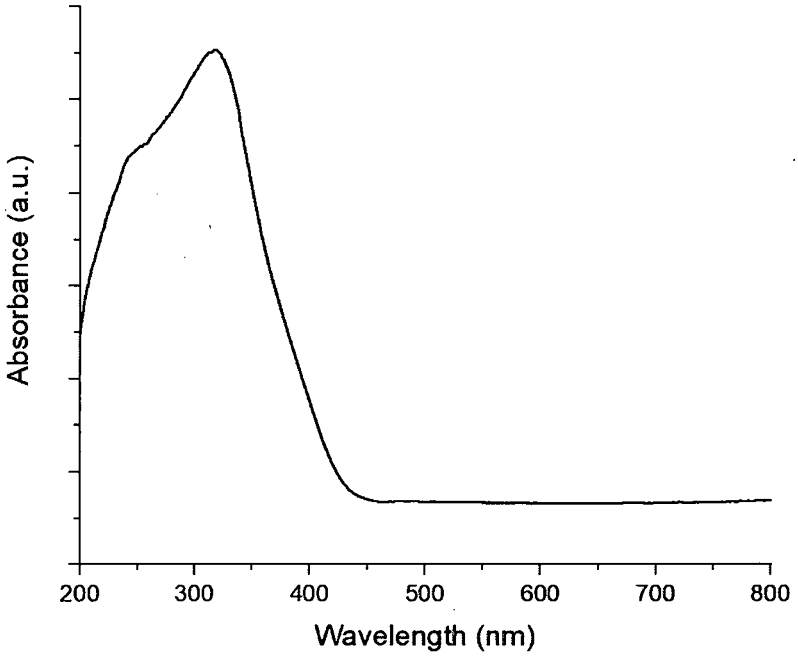
Absorbance (a.u.)
200
300
400
500
600
700
800
Wavelength (nm)

[Fig. 12]

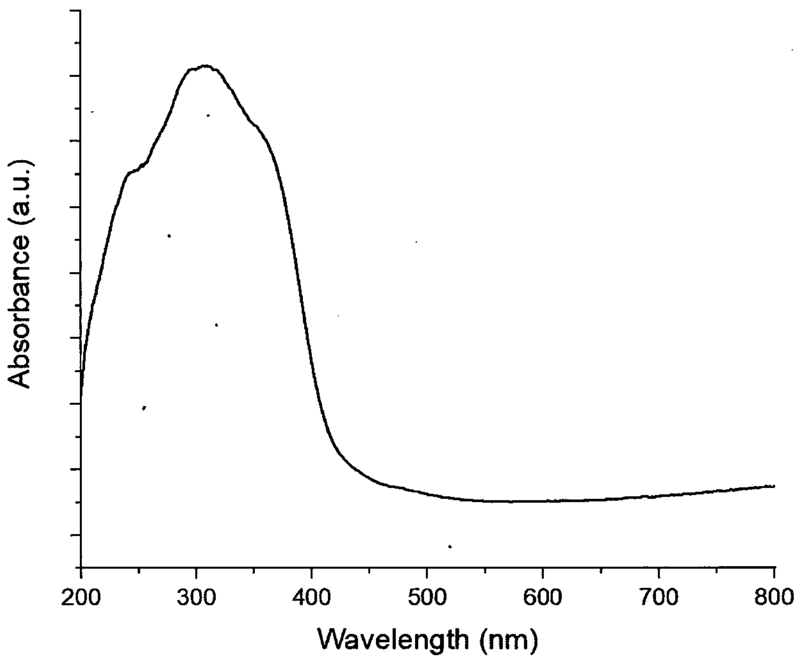
Absorbance (a.u.)
200
300
400
500
600
700
800
Wavelength (nm)

[Fig. 13]

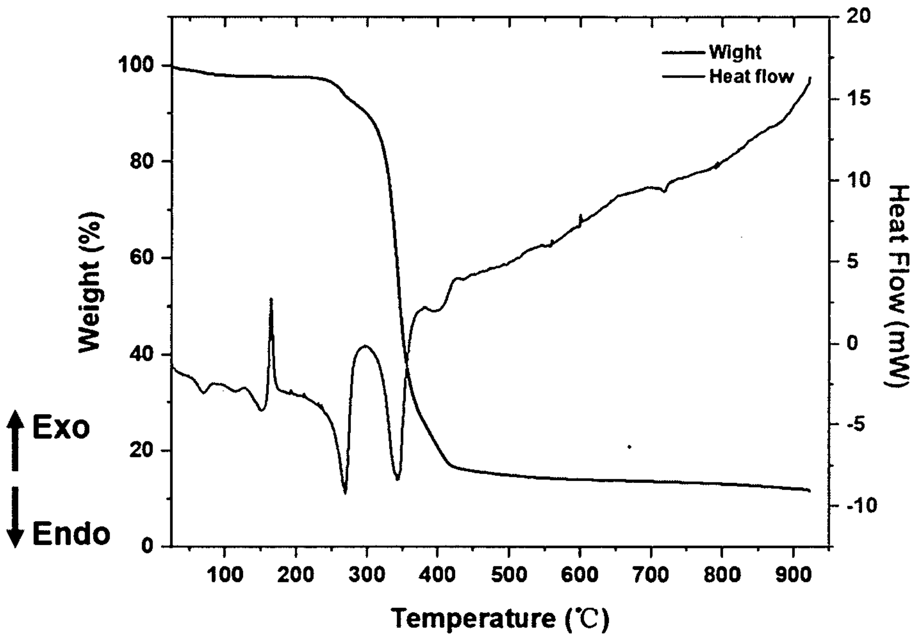
Wight
Heat flow
Weight (%)
Heat Flow (mW)
Exo
Endo
Temperature (℃)
100
80
60
40
20
0
20
15
10
5
0
-5
-10
100
200
300
400
500
600
700
800
900

[Fig. 14]

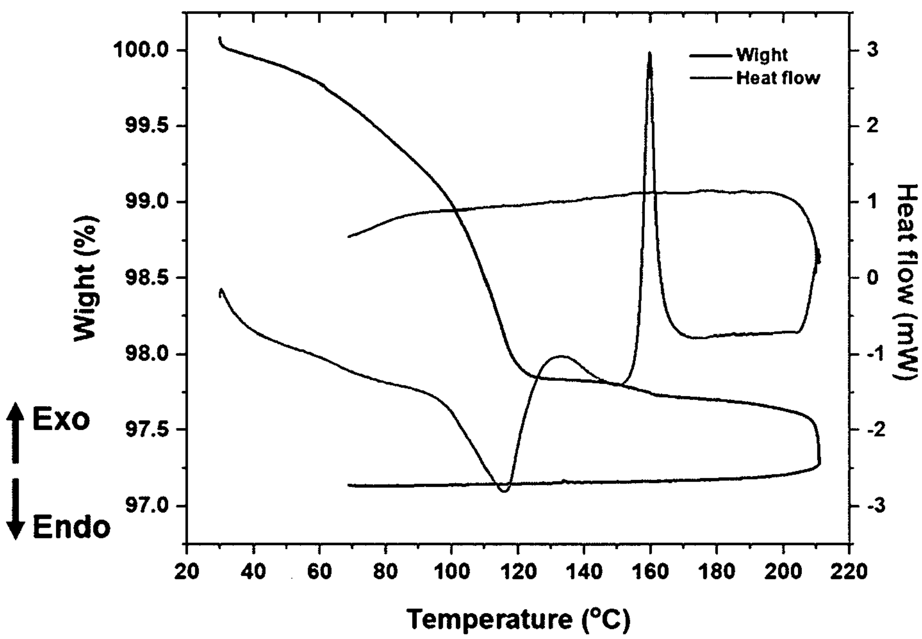
Wight
Heat flow
Wight (%)
Heat flow (mW)
Exo
Endo
Temperature (°C)
100.0
99.5
99.0
98.5
98.0
97.5
97.0
3
2
1
0
-1
-2
-3
20
40
60
80
100
120
140
160
180
200
220

[Fig. 15]

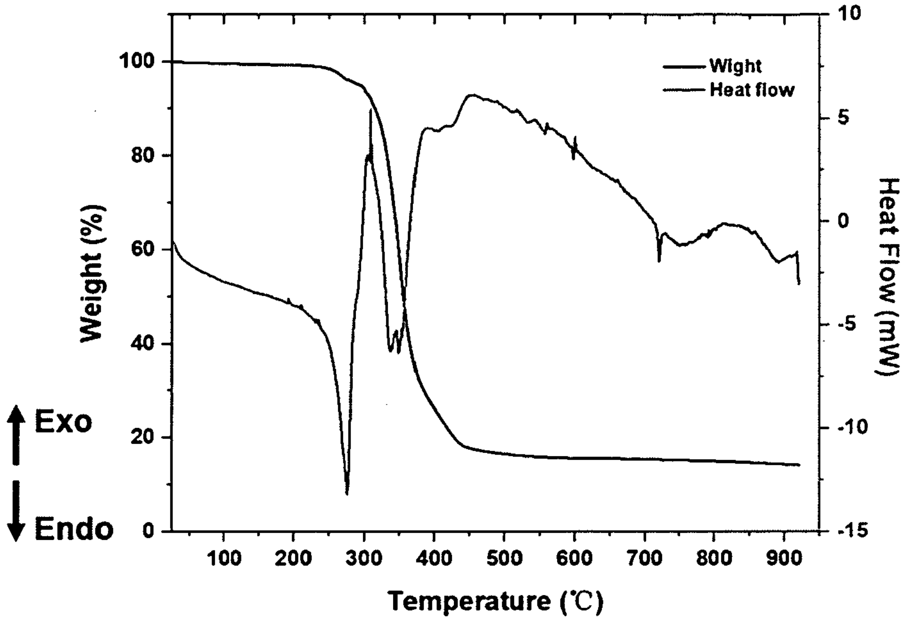
Wight
Heat flow
Weight (%)
Heat Flow (mW)
Exo
Endo
Temperature (℃)

[Fig. 16]

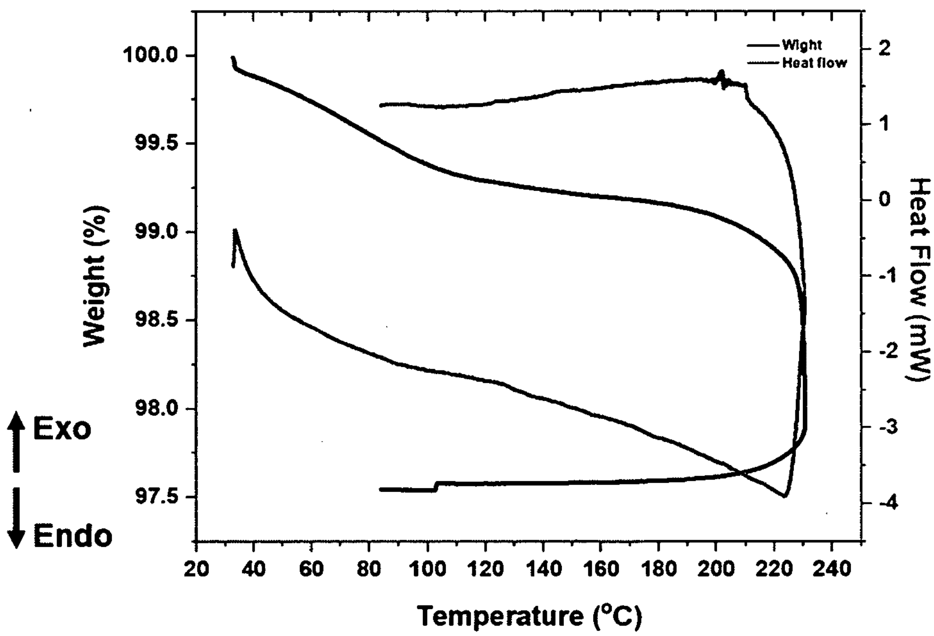
Wight
Heat flow
Weight (%)
Heat Flow (mW)
Exo
Endo
Temperature (°C)

[Fig. 17]

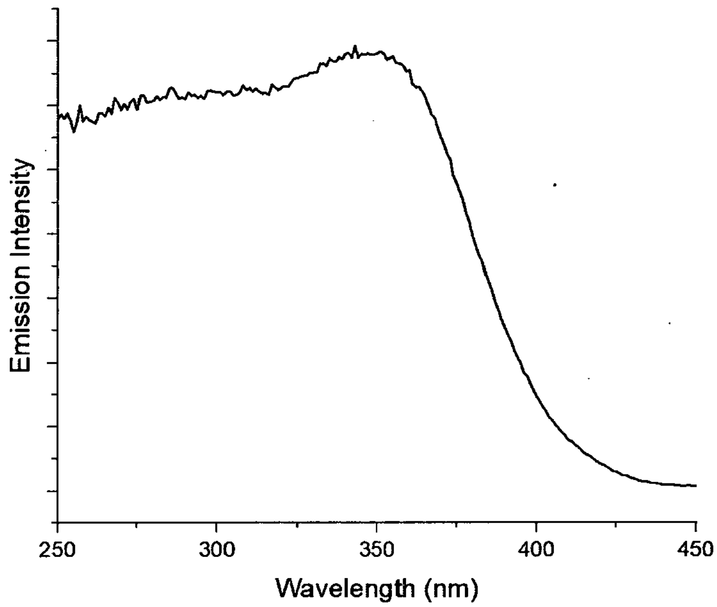
Emission Intensity
250
300
350
400
450
Wavelength (nm)

[Fig. 18]

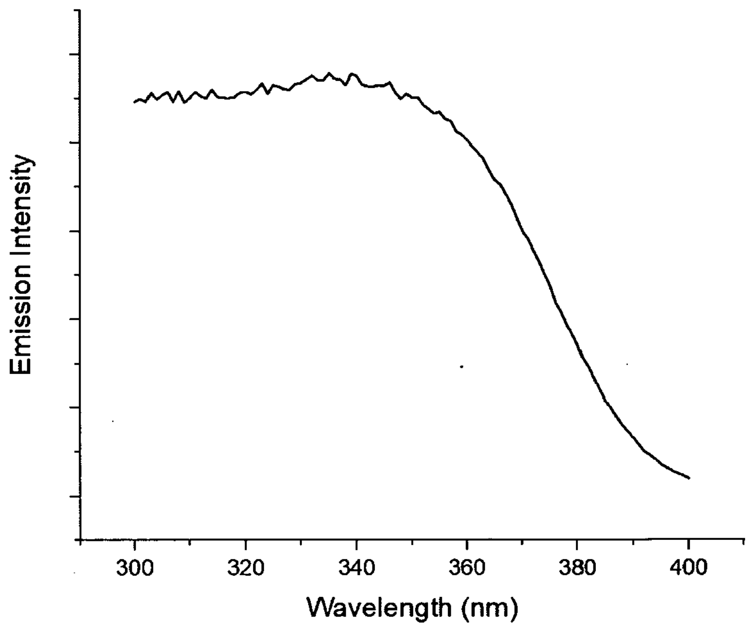
Emission Intensity
300
320
340
360
380
400
Wavelength (nm)

European Patent Office

# EUROPEAN SEARCH REPORT

Application Number
EP 23 31 5360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EVARISTE SLOANE ET AL: "Straightforward coordination-driven supramolecular chemistry preparation of a discrete solid-state luminescent Cu4 polymetallic compact assembly based on conformationally flexible building blocks", INORGANICA CHIMICA ACTA, ELSEVIER BV, NL, vol. 516, 4 November 2020 (2020-11-04), XP086428004, ISSN: 0020-1693, DOI: 10.1016/J.ICA.2020.120115 [retrieved on 2020-11-04] * Scheme 1; compound A to D * ----- | 1-5 | INV. C09K11/06 C07F9/50 |
| | | | TECHNICAL FIELDS SEARCHED (IPC) |
| | | | H05B C09K |

The present search report has been drawn up for all claims

1

| Place of search | Date of completion of the search | Examiner |
|---|---|---|
| The Hague | 12 April 2024 | Schoenhentz, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **OTWINOWSKI, Z.** ; **MINOR, W**. In Methods in Enzymology. Academic Press, 1997, vol. 276, 307
- **ALTOMARE, A.** ; **BURLA, M. C** ; **CAMALLI, M.** ; **CASCARANO, G.** ; **GIACOVAZZO, C** ; **GUAGLIARDI, A.** ; **MOLITERNI, A. G. G** ; **POLIDORI, G** ; **SPAGNA, R**. *J. of Applied Cryst*, 1999, vol. 32, 115
- **SHELDRICK G.M.** ; **SHELX97**. Program for the Refinement of Crystal Structures. University of Göttingen, 1997
- **SPEK, A. L.** *J. Appl. Crystallogr*, 2003, vol. 36, 13
- **VAN DER STUIS, P.** ; **SPEK, A. L**. *Acta Crystallogr*, 1990, vol. 46, 194
- International Tables for X-ray Crystallography. 1992, vol. C